# EUROPEAN PATENT SPECIFICATION

(11) **EP 2 224 646 B1**
(45) Date of publication and mention of the grant of the patent: **15.08.2012**
(21) Application number: 10006488.0
(22) Date of filing: 15.08.2008
(51) Int. Cl.: H04W 72/00, H04L 27/00, H04B 1/69

(54) **Medium access control frame structure in wireless communication system**
Mediumzugangssteuerungsrahmenstruktur in einem drahtlosen Kommunikationssystem
Structure de trames de contrôle d'accès dans un système de communication sans fil

(30) Priority: 15.08.2007 US 956031 P; 13.08.2008 US 191042
(43) Date of publication of application: 01.09.2010
(62) Divisional of application: 08797939.9
(73) Proprietor: Motorola Mobility, Inc., Libertyville, IL 60048 (US)
(72) Inventor: Talukdar, Anup K., Schaumburg Illinois 60195 (US); Cudak, Mark C., Rolling Meadows Illinois 60008 (US); Baum, Kevin L., Rolling Meadows Illinois 60008 (US); Ghosh, Amitava, Buffalo Grove Illinois 60089 (US); Tzavidas, Stavros, Evanston Illinois 60201 (US); Wang, Fan, Vernon Hills Illinois 60061 (US); Xu, Hua, Lake Zurich Illinois 60047 (US); Zhuang, Xiangyang, Hoffmann Estates Illinois 60195 (US)
(74) Representative: McLeish, Nicholas Alistair Maxwell

(56) References cited:
- EP-A- 1 798 883
- H.KOORAPATY: "Backward Compatible Use of Larger Bandwidths for 802.16m" , 16 January 2008 (2008-01-16), XP002507325 Retrieved from the Internet: URL:http://74.125.77.132/search?q=cache:a5 wI5dwaNjgJ:wirelessman.org/tgm/contrib/C80 216m-07_249r1.doc+backward+compatibile+use +of+larger&hl=nl&ct=clnk&cd=1&gl=nl> [retrieved on 2008-12-09]
- M.CUDAK ET AL.: "Draft IEEE802.16m requirements" , pages 1-46, XP002507326 05-03-2007 Retrieved from the Internet: URL:http://74.125.77.132/search?q=cache:2H Iip5NGg54J:www.ieee802.org/16/tgm/docs/802 16m-07_002r2.pdf+draft+ieee802.16m&hl=nl&c t=clnk&cd=3&gl=nl> [retrieved on 2008-12-09]

## Description

### FIELD OF THE DISCLOSURE

The present disclosure relates generally to wireless communications and more specifically to medium access control frame structures in wireless communication systems with improved latency support.

### BACKGROUND

An important consideration for advanced wireless communication systems is one-way air-interface latency. Air-interface latency is primarily dependent on the Medium Access Control (MAC) frame duration. In the developing IEEE 802.16m protocol, for example, the proposed target latency is less than approximately 10 msec and some observers have suggested that a much lower latency may be required to compete with other developing protocols, for example, with 3GPP Long Term Evolution (LTE). The IEEE 802.16m protocol is an evolution of the WiMAX-OFDMA specification for the IEEE 802.16e protocol. However, the legacy IEEE 802.16e TDD frame structure has a relatively long duration and is incapable of achieving the latency targets set for IEEE 802.16m.

Evolutionary wireless communication systems should also support for legacy system equipment. For example, some IEEE 802.16e and IEEE 802.16m base stations and mobile stations are likely to coexist within the same network while upgrading to the newer system. Thus IEEE 802.16e mobile stations should be compatible with IEEE 802.16m base stations, and IEEE 802.16e base stations should support IEEE 802.16m mobile stations. Thus frame structures for air-interfaces are proposed with a view to achieving lower latency and in some embodiments to maintaining backward compatibility.

A legacy system is defined as a system compliant with a subset of the WirelessMAN-OFDMA capabilities specified by IEEE 802.16-2004 (specification IEEE Std 802.16-2004: Part 16: IEEE Standard for Local and metropolitan area networks: Air Interface for Fixed Broadband Wireless Access Systems, June 2004) and amended by IEEE 802.16e-2005 (IEEE Std. 802.16e-2005, IEEE Standard for Local and metropolitan area networks, Part 16: Air Interface for Fixed and Mobile Broadband Wireless Access Systems, Amendment 2: Physical and Medium Access Control Layers for Combined Fixed and Mobile Operation in Licensed Bands, and IEEE Std. 802.16-2004/Cor1-2005, Corrigendum 1, December 2005 ) and IEEE 802.16Cor2/D3, where the subset is defined by WiMAX Forum Mobile System Profile, Release 1.0 (Revision 1.4.0: 2007-05-02), excluding specific frequency ranges specified in the section 4.1.1.2 (Band Class Index).

European patent application publication no. EP-A-1798883 describes a method of assigning frequency spectrum bandwidth of an OFDM and OFDMA coexistence system in a manner that achieves higher frequency spectrum utilization. The base station system combines uplink and downlink data containing OFDM sub-frames and OFDMA sub-frames in a time division fashion, assigns the frequency spectrum reasonably according to the different bandwidth requirements of the OFDM and the OFDMA and the use condition of the frequency band, and constitutes a frame structure realizing the coexistence of the OFDM and the OFDMA so as to send the OFDMA uplink/downlink data and the OFDM uplink/downlink data.

According to one aspect of the present invention there is provided a method in a second protocol wireless communication infrastructure entity, the method comprising: allocating radio resources, in a radio frame, to a wireless terminal compliant with a first protocol and to a wireless terminal compliant with a second protocol, the radio frame including a first protocol resource region and a second protocol resource region, the radio frame including a first protocol allocation control message and a second protocol allocation control message, the first protocol allocation control message allocating resources within the first protocol resource region to wireless terminal compliant with the first protocol, the second protocol allocation control message allocating resources within the second protocol resource region wireless terminal compliant with the second protocol.

Advantageously, the radio frame constitutes a sequence of radio frames, wherein at least fifty percent of the radio frames in the sequence include a first protocol preamble.

Advantageously, the second protocol allocation control message is located in a predetermined location within the radio frame.

Advantageously, at least the first protocol resource region includes pilot sub-carriers, the radio frame including a message indicating that first protocol terminals should not use pilot sub-carriers in the second protocol resource region. Preferably the message identifies a dedicated pilot interval, the dedicated pilot interval including the second protocol resource region. Alternatively or in addition the radio frame includes a message identifying a boundary of the first protocol resource region.

Advantageously, the radio frame includes a pointer pointing to location of the second allocation control message in the radio frame.

Advantageously, the first protocol is IEEE 802.16(e) and the second protocol is IEEE 802.16(m).

Advantageously the first protocol allocation control message allocates resources within the second protocol resource region for a wireless terminal compliant with the second protocol.

Advantageously the first protocol allocation control message further allocates resources within the first protocol resource region to a wireless terminal compliant with both the first protocol and the second protocol.

According to a further aspect of the present invention there is provided a method in a second protocol wireless communication infrastructure entity, the method comprising: allocating radio resources, in a sequence of radio frames, to a wireless terminal compliant with a first protocol and to a wireless terminal compliant with a second protocol, the sequence of radio frames includes a first protocol resource region and a second protocol resource region, the sequence of radio frames includes a first protocol allocation control message and a second protocol allocation control message, the first protocol allocation control message allocating resources within the first protocol resource region, the second protocol allocation control message allocating resources within the second protocol resource region.

Advantageously the first protocol allocation control message and the second protocol allocation control message occur in a common frame, the first protocol allocation control message allocating resources within a first protocol resource region in a frame subsequent to the common frame, the second protocol allocation control message allocating resources within a second protocol resource region in a frame subsequent to the common frame.

Advantageously the first protocol resource region and the second protocol resource region occur in a common frame, the first protocol allocation control message occurs in a frame preceding the common frame, and the second protocol allocation control message occurs in a frame preceding the common frame.

Advantageously, at least fifty percent of the radio frames in the sequence include a first protocol preamble.

Advantageously the second protocol allocation control message is located in a predetermined location within at least some of the frames in the sequence of radio frames.

Advantageously, at least the first protocol resource region includes pilot sub-carriers, the radio frame including a message indicating that first protocol terminals should not use pilot sub-carriers in the second protocol resource region. Preferably the message identifies a dedicated pilot interval, the dedicated pilot interval including the second protocol resource region. Alternatively or in addition the radio frame includes a message identifying a boundary of the first protocol resource region. Preferably the radio frame includes a pointer pointing to location of the second allocation control message in the radio frame.

Advantageously, the first protocol is IEEE 802.16(e) and the second protocol is IEEE 802.16(m).

According to a further aspect of the present invention there is provided a method in a wireless communication infrastructure entity, the method comprising: allocating radio resources, in a radio frame, to wireless terminals compliant with a first protocol and wireless terminals compliant with a second protocol, the radio frame including a plurality of blocks including a first block and last block, each block comprising a plurality of symbols, the first block including a first protocol preamble, the remaining blocks are devoid of a first protocol preamble, each of the plurality of blocks is a first protocol block or a second protocol block.

Advantageously the radio frame includes at least one first protocol block and at least one second protocol block, the radio frame including a first protocol allocation control message for allocating resources in the first protocol block, the radio frame including a second protocol allocation control message for allocating resources in the second protocol block.

Advantageously the radio frame includes a first protocol allocation control message for allocating resources within a first protocol block, the first protocol allocation control message located in the first block. Preferably the first block is a first protocol block. Alternatively the first block is a second protocol block. In one embodiment all of the blocks are second protocol blocks. In another embodiment the first protocol allocation control message allocates resources within a first protocol block of a radio frame that is different than the radio frame within which the first protocol allocation control message is located.

Advantageously each block comprises substantially the same number of symbols.

Advantageously the first protocol is IEEE 802.16(e) and the second protocol is IEEE 802.16(m).

According to a further aspect of the present invention there is provided a method in a wireless communication infrastructure entity, the method comprising: allocating radio resources in a super-frame, the super-frame including a plurality of frames, each frame including at least two regions; at least one frame of the super-frame including a control message, the control message specifying a configuration characteristic of the regions within each frame of a super-frame, the configuration characteristic of the regions selected from a group comprising a number regions, a type of region, and an ordering of the regions.

Advantageously each region is selected from a group of regions comprising: an uplink region and a downlink region, the control message specifying whether the regions of the frame are uplink regions or downlink regions. Preferably the control message also specifies a number of uplink regions or downlink regions within each frame of a super-frame. Alternatively or in addition the control message specifies a size of the uplink regions or downlink regions within each frame of a super-frame.

Advantageously the control message specifies a size of the regions within each frame of a super-frame.

Advantageously the configuration characteristic of the regions within each frame of the super-frame is specified in a map of the control message, the control message containing a reference number specifying the map applicable for the super-frame.

Advantageously at least one frame has a different number of blocks than the other frames of the super-frame.

Advantageously at least one frame has two blocks and at least one other frame has four blocks.

The various aspects, features and advantages of the disclosure will become more fully apparent to those having ordinary skill in the art upon careful consideration of the following Detailed Description thereof with the accompanying drawings described below. The drawings may have been simplified for clarity and are not necessarily drawn to scale.

### BRIEF DESCRIPTION OF THE DRAWINGS

FIG. 1 is a wireless communication system.

FIG. 2 is a legacy protocol frame mapped to a next generation 1:2 sub-frame.

FIG. 3 is a frame structure configuration having a 75 % duty cycle.

FIG. 4 is another frame structure configuration having a 25 % duty cycle.

FIG. 5 is a super-frame structure configuration.

FIG. 6 is a frame having multiple sub-blocks of equal duration.

FIG. 7 is another frame having multiple sub-blocks of equal duration.

FIG. 8 is a frame having multiple sub-blocks of equal duration.

FIG. 9 is a super-frame comprising multiple frames of equal duration.

FIG. 10 is an exemplary hybrid frame structure.

FIG. 11 is a frame having first and second protocol resource regions.

FIG. 12 is another frame having first and second protocol resource regions.

FIG. 13 is a frame having first and second protocol resource regions.

FIG. 14 is a frame having first and second protocol resource regions.

FIG. 15 is a frame having first and second protocol resource regions.

FIG. 16 is a sequence of radio frames having first and second resource regions.

FIG. 17 is another sequence of radio frames having first and second resource regions.

FIG. 18 is another sequence of radio frames having first and second resource regions.

### DETAILED DESCRIPTION

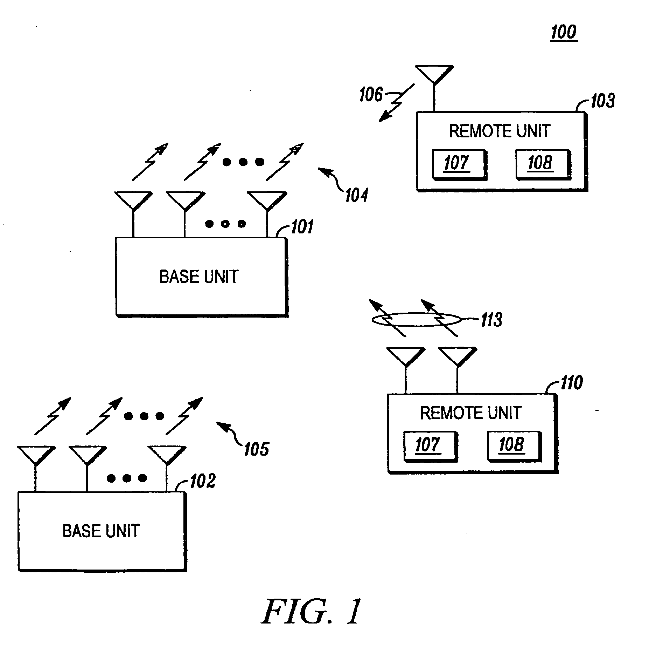

In FIG. 1, the wireless communication system 100 includes one or more fixed base infrastructure units forming a network distributed over a geographical region. A base unit may also be referred to as an access point, access terminal, Node-B, eNode-B, or by other terminology used in the art. The one or more base units 101 and 102 serve a number of remote units 103 and 110 within a serving area, for example, a cell, or within a cell sector. The remote units may be fixed or terminal. The remote units may also be referred to as subscriber units, mobile stations, users, terminals, subscriber stations, user equipment (UE), terminals, or by other terminology used in the art.

Generally, base units 101 and 102 transmit downlink communication signals 104 and 105 to serving remote units on at least a portion of the same resources (time and/or frequency). Remote units 103 and 110 communicate with the one or more base units 101 and 102 via uplink communication signals 106 and 113. The one or more base units may comprise one or more transmitters and one or more receivers that serve the remote units. The remote units may also comprise one or more transmitters and one or more receivers.

In one embodiment, the communication system utilizes OFDMA or a next generation single-carrier (SC) based FDMA architecture for uplink transmissions, such as interleaved FDMA (IFDMA), Localized FDMA (LFDMA), DFT-spread OFDM (DFT-SOFDM) with IFDMA or LFDMA. In OFDM based systems, the radio resources include OFDM symbols, which may be divided into slots, which are groupings of sub-carriers. An exemplary OFDM based protocol is IEEE 802.16(e).

Generally, the wireless communication system may implement more than one communication technology as is typical of systems upgraded with newer technology, for example, the evolution of GSM to UMTS and future UMTS releases thereof. In FIG. 1, for example, one or more of the base units 101 may be legacy technology base stations, for example, IEEE 802.16(e) protocol base stations, and other base station may be newer generation technologies, for example, IEEE 802.16(m) protocol base stations. In these cases, it is generally desirable for the new technologies to be backward compatible with the legacy technology. For the evolution of IEEE 802.16(e), the backward compatibility constraint implies that the legacy frame structure, for example, the 5 msec duration 802.16(e) frame, must be supported by 802.16(m) base stations. Additionally, in order to efficiently support delay sensitive applications, 802.16(m) base stations should be able to service both 802.16(m) and legacy terminals within the common frame structure.

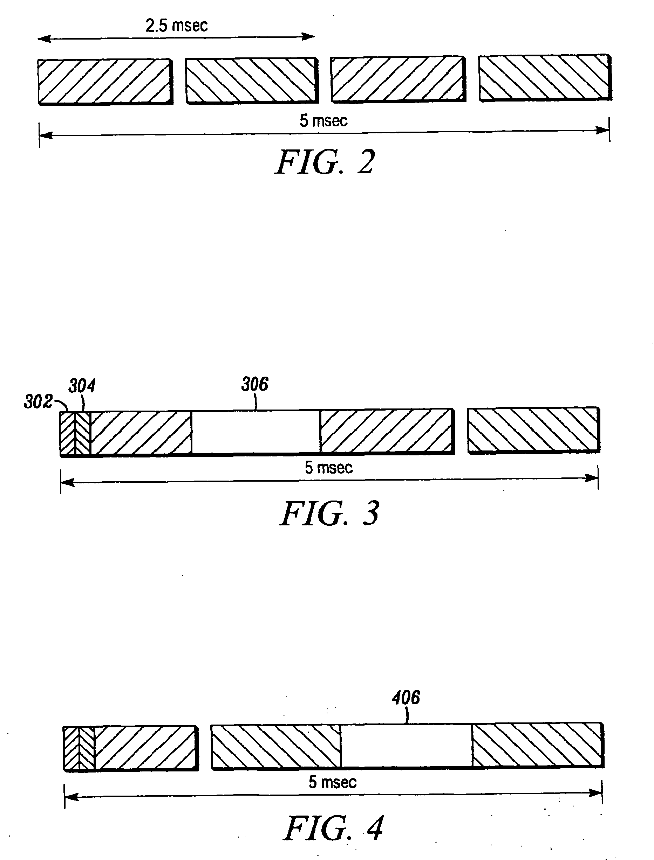

Regarding frame structure, it is generally necessary to design frames having a relatively short duration in order to reduce latency. Thus to deliver low latency in 802.16m systems with backward compatibility, it is necessary to develop a sub-frame structure based on the legacy 802.16(e) frame. In order to address the latency requirements, it is necessary to design frames with shorter than 5msec duration. However, to efficiently serve legacy traffic, it is also necessary that 802.16(m) systems have 5 msec legacy frames. Thus two broad classes of frames would be required for an 802.16(m) system having reduced latency and support for legacy 802.16(e) devices. The first class includes a full-frame (having a 5 msec duration) with one DL interval and one UL interval similar to the 802.16(e) TDD legacy frames. The second class of frames includes a sub-frame. For example, a 5 msec frame having N DL intervals and N UL intervals. This frame may also contain N transmit/receive transition gap (TTG) and receive/transmit transition gap (RTG) intervals. N could be kept small, typically N=2, in order to limit TTG and RTG related overhead. According to this exemplary scheme, the legacy 802.16(e) TDD frames can only be a full-frame and the 802.16(m) frames are preferably sub-frame 1:2, although they could also be full-frames. The h-frames can be either full-frame or sub-frame 1:2. FIG. 2 illustrates an 802.16(m) sub-frame 1:2 that is backwards compatible with a legacy 802.16(e) TDD frame, wherein the first and third blocks are downlink blocks and the second and fourth blocks are uplink blocks. In general, the length of the intervals of the blocks can be different.

The 802.16(m) 5 msec frame can be perceived to be composed of following types of basic regions: e-DL region used for transmission of downlink traffic to 802.16(e) terminals; e-UL: region allocated for transmission of data and control messages by 802.16(e) terminals; m-DL: region allocated for transmission to 802.16(m) terminals; and m-UL: region allocated for transmission by 802.16(m) terminals. The e-DL and e-UL regions can also be used for transmissions to/from 802.16(m) terminals. In general, the structures of the 802.16(m) region (sub-channel and pilot structures) can be different from those of the 802.16(e) regions. Depending on the population of legacy and newer generation terminals, it may be necessary to allocate the entire 5 msec frame for 802.16(e) services or 802.16(m) services.

Using these different types of regions, various types of 5msec frame structures can be created to suit the traffic service requirements. These are: e-frames composed of only e-DL and e-UL regions used to serve legacy 802.16(e) TDD terminals (802.16(m) terminals can also be served in these frames in legacy mode); m-frames composed of m-DL and m-UL regions only for serving only 802.16(m) terminals; h-frames containing both e-DL/e-UL and m-DL/m-UL regions for serving 802.16(e) and 802.16(m) terminals. The 802.16(m) portion and the 802.16(e) portion should be time division multiplexed so that the 802.16(m) control channel, pilot, and sub-channelization can provide flexibility.

Depending on the device type population and traffic pattern, it may be necessary to treat an m-frame or an h-frame as a legacy virtual frame in a cell/sector. The m-DL and m-UL regions in these frames may have different sub-channel/pilot structures than the legacy systems; those regions need to be treated as "dead zones", which the legacy terminals should not use. The full-frame, being similar in structure to the legacy 802.16(e) frame, can be easily mapped to a legacy virtual frame with full utilization of the frame resources. However, the sub-frame 1:N, which can also be mapped to legacy 802.16(e) virtual frame, will contain "dead zone(s)" where no 802.16(e) (TDD) transmission can be allowed to ensure DL/UL synchronization.

An 802.16(m) base unit can provide service to legacy 802.16(e) terminals in full-frames. To provide service in the sub-frame 1:N, the 802.16(m) base unit can map a legacy virtual 5 msec frame to N adjacent sub-frames and the train of sub-frames can be organized as a train of legacy 5msec virtual frames. There are N choices for the time division duplex frame (TDD) split position in a legacy virtual frame. The system wide synchronization requirement for the TDD system imposes additional constraints on the downlink and uplink transmission intervals, creating dead zones during which no transmission should be done to and from legacy 802.16(e) TDD terminals. However, transmissions to and from 802.16(m) terminals are possible in these dead zones. FIG. 3 illustrates a first configuration wherein a legacy 802.16(e) TDD terminal encounters a 5 msec frame having a 75 % duty cycle. The frame includes a legacy preamble 302, a DL map 304, and a dead zone 306 during which there is no legacy downlink allocation during the 802.16(m) uplink interval. FIG. 4 illustrates a second configuration wherein the frame includes a dead zone 406 during which there is no legacy uplink allocation during the 802.16(m) downlink interval.

A generic message structure and its parameters to indicate a dead zone is shown in Table 1.

**Table 1 Message parameter for dead zone indication**

| **Parameter** | **value** |
|---|---|
| location | <symbol number>/ <time> |
| dedicated pilot tag | 0 or 1 |

In the above message, the parameter "location" indicates a position within the frame in time (which may be denoted by the symbol number within the frame or absolute time or time offset from the start of the frame or offset from some other specified time); the interpretation of the parameter "location" depends on the value of the parameter "dedicated pilot tag". If "dedicated pilot tag" is 1, the pilot symbols after "location" are dedicated; if it is 0, it indicates that the pilot symbols after the "location" are not dedicated pilots. Thus a zone with dedicated pilots can be described by two occurrences of this message: the first message with dedicated pilot tag=1 and location="T1", followed by a 2^{nd} message with dedicated pilot tag = 0 and location="T2", where T2>=T1; a legacy terminal which has been allocated resources within this zone should use only pilots within its burst for channel estimation. A legacy terminal which has not been allocated resources within this zone will ignore the pilots in this zone and also it will not need to decode any of the data transmissions within the dedicated pilot zone. This combined with the BS not making an allocation to any 16e mobile in the zone indirectly disables or isolates the 16e mobiles from this zone. Thus, 16e mobile effectively ignores whatever is in the zone.

An example message which can be used for indicate dead zones is the STC_DL_ZONE_IE() of IEEE 802.16e specification; the parameters "OFDMA symbol offset" and "Dedicated pilots" in this message corresponds to the parameters "location" and "dedicated pilot tag" in the above generic message in Table 1.

Another message structure and its parameters which can be used to implement dead zones are shown in Table 2.

**Table 2 Dead zone message type 2**

| **Parameter** | **value** |
|---|---|
| Starting symbol | <symbol number> / <time> |
| Starting sub-channel | <sub-carrier number>/ <sub-channel number> |
| Symbol count | <Number of symbols>/ <duration in time> |
| Sub-channel count | <number of sub-carriers> / <number of sub-channels> |

The four parameters describe a rectangular dead zone of time-frequency resources. In this message, the parameter "starting symbol" indicates a position within the frame in time (which may be denoted by the symbol number within the frame or absolute time or time offset from the start of the frame or offset from some other specified time) where the dead zone begins; "symbol count" indicates the duration of the dead zone, starting from the "starting symbol". The parameter "starting sub-channel" indicates the location in the sub-carrier frequency where the dead zone begins; this is in units of sub-carrier or sub-channel, which is a group of sub-carriers; "sub-channel count" indicates the length of the dead zone in the frequency dimension. An example of this generic message type is the PAPR_Reduction_and_Safety_Zone_Allocation_IE() of the IEEE 802.16e specification. In this message, the parameters "OFDMA_symbol_offset", "Subchannel offset", "No. OFDMA symbols" and "No. sub-channels" corresponds to the parameters "starting symbol", "starting sub-channel", "symbol count" and "sub-channel count" of the generic dead zone message type 2, respectively; the PAPR_Reduction_Safety_Zone parameter in the PAPR_Reduction_and_Safety_Zone_Allocation_IE() should be set to "1" to indicate a reduced interference zone to the legacy terminal; this will effectively direct the terminal not to perform any uplink transmission in that zone.

Striking a balance between efficient legacy support and low-latency 802.16(m) service is challenging with a homogeneous frame size. The full-frames discussed above provide efficient legacy support while sacrificing latency performance for 802.16(m) terminals. The sub-frames provide low-latency support for 802.16(m) terminals while sacrificing capacity for legacy terminals in the form of dead zones.

In one embodiment, a heterogeneous configuration contains both full-frames and sub-frames, wherein the full-frames and sub-frames are interleaved over time. Within a cell, the full-frames are primarily used for serving legacy terminals present in the cell, whereas the sub-frames are primarily used to serve the 802.16(m) terminals. However, for servicing packets with urgent delay constraints, either frame type can be used to service either type of terminal. The full-frames and the sub-frames are organized in a repeating pattern, called a super-frame.

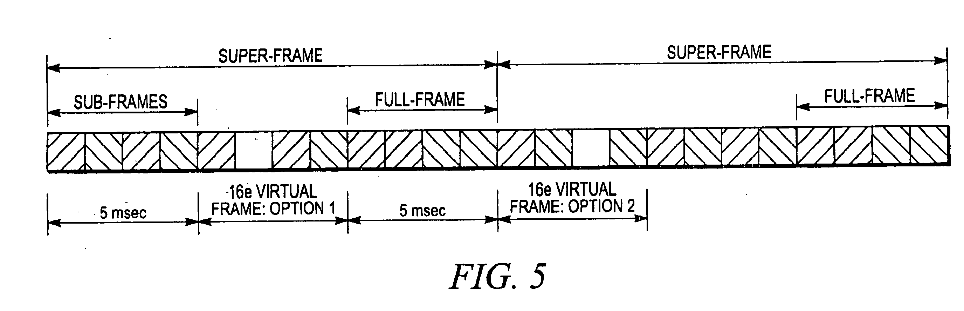

In the super-frame of FIG. 5, the interleaving pattern consists of two sub-frames 1:2 followed by one full-frame. This pattern is generally the same over all sector/cells. The first super-frame contains an 802.16(e) TDD virtual frame configuration with 75% duty cycle and the 2^{nd} super-frame contains a 802.16(e) TDD virtual frame configuration with 25% duty cycle. Generally, for the same 802.16(e) TDD virtual frame, the configuration options can be different for different base stations. One base station may employ the 802.16(e) virtual frame to communicate with a legacy terminal while another neighboring base station may employ a 16m Sub-frame 1:2 structure to communicate with a 16m base station without any undesired interference between uplink and downlink transmissions. The proportion of the different types of frames and their interleaving pattern in a super-frame is generally determined by the proportion of 802.16(e) and 802.16(m) terminals in the system. The configurations may be implemented on a system-wide basis to ensure that there is no conflict between base unit transmission and reception in adjacent cells (e.g., no conflict in TDD Tx/Rx boundaries among adjacent cells).

Thus a next generation wireless communication infrastructure entity, for example, an 802.16(m) base unit in FIG. 1, would transmit a super-frame including a plurality of frames wherein each frame includes at least two regions. The regions are generally some sort of resource that may be allocated to the terminals for uplink or downlink communications in the case of a TDD system. The super-frames are generally transmitted in a sequence. This superframe structure must be communicated to all base stations in a TDD system to maintain synchronization of all sectors and cell in order to ensure that there is no conflict between base unit transmission and reception in adjacent cells. This structure may be communicated in a control message specifying a configuration characteristic of the regions within each frame of a super-frame. The control message may be transmitted to other base stations over the land line network or by other means such as radio communication links between the base stations. This control message may also be transmitted to terminals in at least one frame of the superframe. The message may specify the configuration characteristic of regions within each frame of the same super-frame in which the message occurs, or in the frames of another super-frame, for example a subsequent super-frame. In one embodiment, the configuration characteristic of the regions within each frame of the super-frame is specified in a control message map or by other means. In any case, in some embodiments, the control message may contain a reference number specifying the map applicable for the super-frame, thereby enabling terminals to distinguish among versions of the control message containing the configuration characteristic.

In one embodiment, the configuration characteristic of the regions is selected from a group comprising: a number regions; region size; region type (e.g., uplink or downlink for a TDD system); and the ordering of the regions. Multiple characteristics may also be specified. In one embodiment, for a TDD system, the control message specifies whether the regions of the frame are uplink regions or downlink regions. Thus the regions are selected from a group of regions comprising: an uplink region and a downlink region. The control message may also specify the number of uplink regions or downlink regions within each frame of a super-frame. In some embodiments, the control message specifies a size of uplink regions or downlink regions within each frame of a super-frame. In FIG.5, the frames generally have different numbers of resource blocks (a resource block is a downlink or uplink transmission interval). For example, the first and second 5 msec sub-frames have four resource blocks, and the third 5 msec sub-frame has two blocks.

There are various ways to configure frames that provide legacy compatibility and reduce latency based on the proposed framework. Another factor to consider in the design of a new protocol frame structure is support for both TDD and FDD. Preferably, similar frame and sub-frame structures can be applied for both TDD and FDD.

In one embodiment, a frame is divided into multiple blocks of equal size, wherein the blocks may support one or more protocols, for example, IEEE 802.16(e) and/or 802.16(m). Such a frame would enable an 802.16(m) wireless communication infrastructure entity to allocate radio resources to both 802.16(e) and 802.16(m) wireless terminals. Generally, the radio frame includes a plurality of blocks, including a first block and last block, wherein each block comprises a plurality of symbols. In one embodiment, each block comprises substantially the same number of symbols. The first block includes a first protocol preamble, for example, a legacy protocol preamble like 802.16(e). The remaining blocks in the frame are devoid of the first protocol preamble.

Generally, the radio frame includes at least one first protocol block and/ or at least one second protocol block, for example, 802.16(e) and/ or 802.16(m) blocks. In some embodiment, the frame includes both first and second protocol blocks. In another embodiment, the frame includes only second protocol blocks, for example, 802.16(m) blocks. The radio frame includes an allocation control message for allocating resources within a protocol block. In frames that include first and second protocol blocks, the radio frame includes a first protocol allocation control message for allocating resources in the first protocol block, and a second protocol allocation control message for allocating resources in the second protocol block. In one embodiment, the allocation control message is a first protocol allocation control message for allocating resources within a first protocol block of a radio frame, for example, a subsequent frame, that is different than the radio frame within which the first protocol allocation control message is located. In one embodiment, the first allocation control message is located in the first block. The first block may be a first or second protocol block, for example, an 802.16(e) or 802.16(m) block.

The sub-blocks may be described based on their position in the frame and the characteristics of the sub-block. For example, a 5 msec frame supporting both 802.16(e) and 802.16(m) protocols may be characterized as one of the region types discussed above. There are five types of 802.16(m) sub-blocks. Each sub block has a unique characteristic designed to achieve the backward compatibility goals and efficient 802.16(m) performance. An 802.16(m) DL Lead Sub-Block contains a legacy 802.16(e) pre-amble in the first symbol. The remaining symbols of the frame may be allocated to 802.16(m). This sub-block may only be transmitted in the first sub-frame. An 802.16(m) DL Lead Compatible sub-block also contain a 802.16(e) FCH and 802.16e DL-MAP in addition to the 16e pre-amble for backward compatibility with legacy terminals. The remaining symbols are allocated to 802.016(m). The Lead Compatible sub-block may be transmitted only in the first sub-frame. An 802.16(m) Synchronization Sub-Block contains a broadcast control that may be used to synchronize an 802.16(m) terminal and describe broader aspects of the 802.16(m) frame. This sub-block occupies a unique position in the 5 ms frame as a reference for synchronization. The second sub-frame is an appropriate, but not necessary, position for this synchronization sub-block. An 802.16(m) DL Sub-Block is a generic 16m sub-block that contains 802.16(m) Downlink data and 802.16(m) control. This may be occupying the 2^{nd}, 3^{rd} or 4^{th} sub-frames. An 802.16(m) UL Sub-Block is a generic 802.16(m) sub-block contains 802.16(m) Downlink data and 802.16(m) control. This block may occupy the 2^{nd}, 3^{rd} or 4^{th} sub-frame.

There are five types of 802.16(e) sub-blocks that may be allocated in the 802.16(m) frame structure. These sub-blocks conform to the legacy specification of 802.16(e) frames and cannot be distinguished from legacy 802.16(e) frames by a legacy mobile. A Legacy DL Lead Sub-Block is identical to legacy frames containing a 802.16(e) pre-amble, 802.16(e) FCH, 802.16(e) DL-MAP. This sub-block will contain 802.16(e) downlink data and would typically contain an UL MAP. A legacy DL Secondary Sub-Block is identical to legacy 802.16(e) numerology and contains 802.16(e) DL data. The Legacy DL Secondary Sub-Block may only follow a Legacy DL Lead Sub-Block. A Legacy DL Tertiary Sub-Block block is identical to a legacy 802.16(e) numerology and contains 802.16(e) DL data. The Legacy DL Tertiary Sub-Block may only follow a Legacy DL Secondary Sub-Block. A legacy UL Tertiary Sub-Block contains legacy uplink data and may also contain legacy uplink control. A legacy UL Tail Sub-Block contains legacy uplink data and may also contain legacy uplink control.

In one implementation, the sub-block type allocated depends on the frame position. The following sub-blocks may be allocated to the first sub-frame position: 802.16(m) Lead Sub-Block; 802.16(m) DL Lead Compatible Sub-Block; and Legacy DL Lead Sub-Block. The following sub-blocks may be allocated to the second sub-frame position: 802.16(m) Synchronization Sub-Block; 802.16(m) DL Sub-Block; 802.16(m) UL Sub-Block; and Legacy DL Secondary Sub-Block. The following sub-blocks may be allocated to the third sub-frame position: 802.16(m) DL Sub-Block; 802.16(m) UL Sub-Block; Legacy DL Tertiary Sub-Block; and Legacy UL Tertiary Sub-Block. The following sub-blocks may be allocated to the fourth sub-frame position: 802.16(m) DL Sub-Block; 802.16(m) UL Sub-Block; and Legacy UL Tail Sub-Block.

Using these different types of regions, various types of frame structures can be created to suit the traffic service requirements also discussed above. Generally, the first block in the frame is a DL region with the first symbol allocated for the preamble. The last symbol or the last 2 or 3 symbols for cells with relatively large radiuses of the DL block, if the next block is an UL block, will be allocated for TTG. If the last block is an UL block, then the last portion of the 5 msec frame is allocated for RTG. For additional DL/UL split, the first symbol of the DL block (following an UL block) is allocated for RTG.

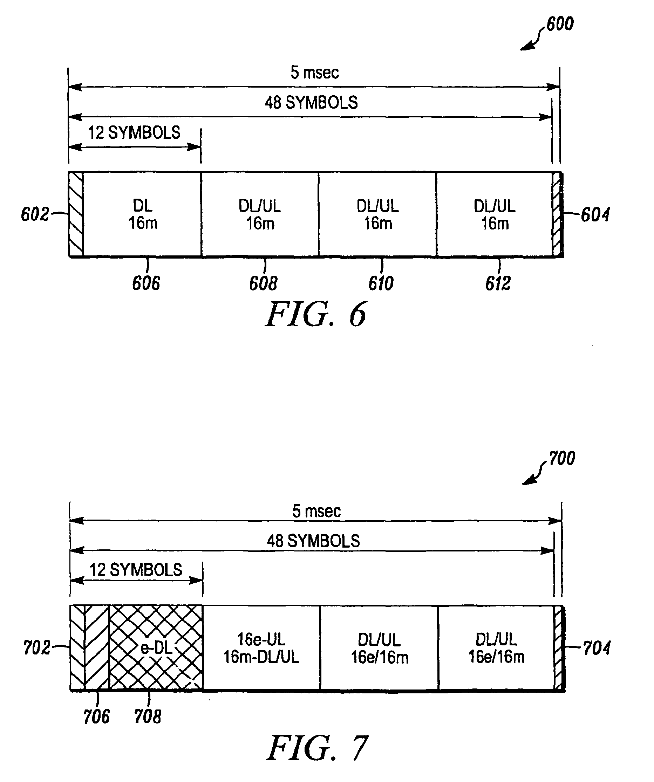

FIG. 6 is an exemplary 802.16(m) frame 600 having equal size sub-blocks. The frame contains a preamble 602 and an RTG 604. All four blocks 606, 608, 610 and 612 contain either m-DL or m-UL region and it does not contain any legacy 802.16(e) structure. The first block (sub-frame) in an m-frame contains an 802.16(m)-DL region. There are several possible TDD splits: 75%, 50%, 25% or 100% (full DL or full UL frame). Both full-frame and Sub-frame 1:2 formats of m-frames can be constructed. Since the m-frame does not support 802.16(e) data, the control overhead of this frame may be small depending on the 802.16(m) control channel design. As many as 3 bits may be required to signal the construction of an 802.16(m) frame. The frame is a 5 msec frame with 12 symbols per frame. In other embodiments, however, the frame may have a longer or shorter duration and each block may contain some other number of symbols.

FIG. 7 is a hybrid frame 700, also referred to as a HEM-I frame, having equal size sub-blocks designed to serve both 802.16(e) and 802.16(m) data traffic in the same 5 msec interval. The frame contains a preamble 702 and an RTG 704. The first block is an 802.16(e) DL region starting with a 1-symbol preamble followed by 802.16(e) MAPs 706 and an 802.16(e) DL traffic resource region 708. The other 3 blocks are a combination of 802.16(e) and 802.16(m) regions (DL or UL). For 802.16(e) terminals, the 802.16(m) sub-frames are in a separate zone with dedicated pilots. Both full-frame and Sub-frame 1:2 can be constructed with this type of frame. There are several constraints in this structure: The 2^{nd} block cannot be an e-UL, because it will not satisfy the TTD splits allowed in legacy 802.16(e) systems; To construct a Sub-frame 1:2, the 2^{nd} block must be m-UL. This requires that, the 802.16(m) MAP either be located in the 1^{st} block or in the previous 5 msec frame interval. Frame 700 includes a full size 16e MAP overhead to support 802.16(e) traffic. However, since part of the frame is allocated for 802.16(m) traffic, the number of 802.16(e) users in this frame is smaller than a legacy 802.16(e) frame. Control channel overhead of frame 700 is medium. As many as 5 bits may be required to signal the construction of a 802.16(m) frame.

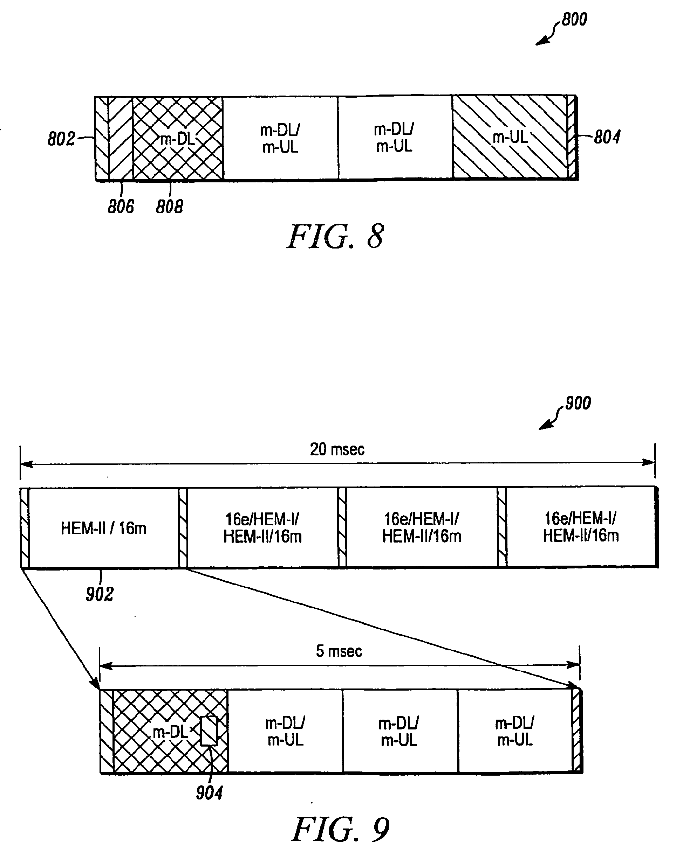

FIG. 8 is a frame 800, also referred to as a HEM-II frame, having equal size sub-blocks that supports only 802.16(m) data traffic. The frame contains a preamble 802 and an RTG 804. The symbol is followed by a 802.16(e) basic MAP 806. The 802.16(e) basic MAP guarantees backward compatibility and includes only essential MAP IEs such as the mandatory elements contained in a IEEE 802.16e compressed map. An IEEE 802.16e compressed map contains the following essential elements: compressed map indicator, UL-MAP appended, reserved bit, Map message length, PHY Synchronization Field, DCD Count, Operator ID, Sector ID, No OFDMA symbols, and DL IE count.

The size of the 802.16(e) basic MAP is between approximately 2 and approximately 4 OFDM symbols. The rest of the first block contains an 802.16(m)-DL region 808. The last block contains an 802.16(m) UL region and the other 2 blocks contain 802.16(m) DL or 802.16(m) UL regions. Both full-frame and Sub-frame 1:2 can be constructed using this configuration. The control overhead for frame 800 is small since it does not support 802.16(e) data traffic. As many as 2 bits may be required to signal the construction of frame 800. Even though the frame 700 of FIG. 7 and the frame 800 of FIG. 8 may be combined into one type of frame, there is a control signaling savings by separating them.

FIG. 9 illustrates the general structure of a super-frame 900 comprising multiple 5 msec frames having fixed duration sub-blocks, wherein the frames support 802.16(e) or 802.16(m) terminals or a combination thereof. In one embodiment, an 802.16(m) frame structure is based on a 20 msec super-frame. To reduce control overhead and simplify signaling and detection for 802.16(m) mobiles (avoid blind detection), the first frame 902 of the super frame is of the type illustrated in FIG. 8 or an m-frame illustrated in FIG. 6. The 802.16(m) broadcast channel (m-BCH) 904 is located at the end of the 1^{st} block of the first frame and it can be used to determine the 20 msec phase when the terminal is initialized. The 802.16(m) frame structure should be transparent to legacy 802.16(e) terminals. Thus 802.16(e) terminals need not detect any new control signal. In a hybrid frame, the 802.16(m) region is allocated a separate zone with dedicated pilots. The control signal in signaling 802.16(m) terminals on the super-frame and frame and sub-frame structure is based on a hierarchical structure. This signal is part of m-BCH, and transmitted every 20 ms. The coded BCH can be mapped into x (e.g., x=2) number of super frames within a 40 ms interval (if x-2). The size of the signal should be reduced and made reliable since it is broadcast. An exemplary Super frame structure control signal is illustrated in Table 3.

**Table 3; Super frame structure control signal**

| **Field** | | | | **Signal size** |
|---|---|---|---|---|
| Frame-0 | | | | 1 bit |
| | Frame: | | | |
| | | m-frame: 0 | | |
| | | HEM-II: 1 | | |
| | Sub-frame | | | Maximum 3 bits |
| | | If m-frame | | |
| | | | take m-frame sub-frame (3 bits, Table 4) | |
| | | else | | |
| | | | take HEM-II sub-frame (2 bits, Table 5) | |
| For i=1:3 | | | | |
| { | | | | |
| | Frame: | | | 2 bit |
| | | m-frame: 00 | | |
| | | HEM-II: 01 | | |
| | | HEM-I: 10 | | |
| | | e-frame: 11 | | |
| | Sub-frame | | | |
| | | If m-frame | | |
| | | | take m-frame sub-frame (3 bits, Table 4) | |
| | | else if HEM-II subframe | | |
| | | | take HEM-II sub-frame (2 bits, Table 5) | |
| | | else if HEM-I subframe | | |
| | | | take HEM-I sub-frame (5 bits, Table 6) | |
| | | else | | |
| | | | take e-frame (0 bits) | |
| } | | | | |
| TTG size (for different cell radius | | | | 2 bits |
| **Total** | | | | 1+3+3*(2+5)+2=27 bits |

Table 4 illustrates an m-frame sub-frame structure control signal.

**Table 4 m-frame sub-frame structure control signal**

| **Field** | | **Signal size** |
|---|---|---|
| 1st sub-frame: DL- 16m | | |
| 2^{nd} sub-frame | | 1 bit |
| | DL-16m: 0 | |
| | UL-16m: 1 | |
| 3^{rd} sub-frame | | 1 bit |
| | DL-16m: 0 | |
| | UL-16m: 1 | |
| 4^{th} sub-frame | | 1 bit |
| | DL-16m: 0 | |
| | UL-16m: 1 | |
| **Total** | | **3 bits** |

Table 5 illustrates an HEM-II sub-frame structure control signal.

**Table 5 HEM-II sub-frame structure control signal**

| **Field** | | **Signal size** |
|---|---|---|
| 1st sub-frame: DL-16m | | |
| 2^{nd} sub-frame | | 1 bit |
| | DL-16m: 0 | |
| | UL-16m: 1 | |
| 3^{rd} sub-frame | | 1 bit |
| | DL-16m: 0 | |
| | UL-16m: 1 | |
| 4^{th} sub-frame: UL- 16m | | |
| **Total** | | **2 bits** |

Table 6 illustrates an exemplary HEM-I sub-frame structure control signal.

**Table 6 HEM-I sub-frame structure control signal**

| **Field** | | **Signal size** |
|---|---|---|
| 1st sub-frame: DL-16 | | |
| 2^{nd} sub-frame | | 2 bit |
| | DL-16m: 00 | |
| | UL-16m: 01 | |
| | DL-16e: 10 | |
| | UL-16e: 11 | |
| 3^{rd} sub-frame | | 2 bit |
| | DL-16m: 00 | |
| | UL-16m: 01 | |
| | DL-16e: 10 | |
| | UL-16e: 11 | |
| 4^{th} sub-frame | | 1 bit |
| | UL-16m: 0 | |
| | UL-16e: 1 | |
| **Total** | | **5 bits** |

In FIG. 9, the exemplary frame structure above is described for a TDD 16m system. However, in an alternative embodiment, a similar frame/sub-frame structure can be applied for FDD 802.16(m). Also, even there are only four sub-frames within one 5ms frame, there are 16 sub-frames within one super frame. Since the control signal in Tables 1-4 can allocate DL/UL and e/m for every sub-frame, the granularity of splitting between DL/ UL and e/m is 1/16, or 6.25%.

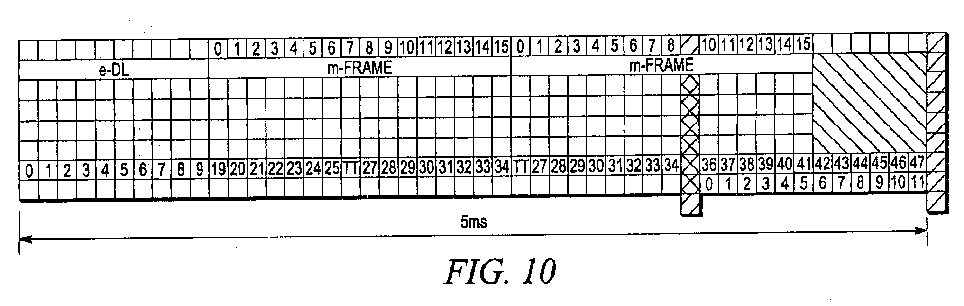

FIG. 10 illustrates an exemplary hybrid frame structure that supports 802.16(e) and 802.16(m). As discussed, the 5 msec frame begins with a 802.16(e) preamble. The 802.16(e) terminals determine the 802.16(e) and 802.16(m) allocations from the 802.16(e) MAP in which the 802.16(m) region is allocated as a separate zone. The 802.16(m) region is composed of one or more m sub-frames, which are of fixed size and located in-between the 802.16(e) DL and 802.16(e) UL regions. This scheme is similar as HEM-I, except that the sub-frame sizes are different, DL/UL is split, and e/m is fixed. FIG. 10 illustrates an exemplary structure. The duration of the m sub-frame can be chosen from factors of 48 symbols; in this case 16 symbols. The number and size of m sub-frames in an h-frame structure can be changed based on the load, delay or other requirements. In this case, 2 m sub-frames are in the hybrid (h) frame. The location of the m sub-frames inside the h-frame can be any place as long as the TTG is covered by the m-frame region. Complete DL/UL synchronization and maximum frame utilization can be achieved by careful design of the m sub-frame relative to the legacy TDD split. A full-frame can be constructed by using one m sub-frame in the 5 msec frame and a sub-frame 1:2 can be constructed using 2 m sub-frames. The fixed-sized m sub-frame structure helps the 802.16(m) terminals to determine the 802.16(m) allocation using blind detection, although explicit control signaling may be used.

In the example above, the allocation of frame resources for legacy and 802.16(m) traffic and the allocation for DL and UL intervals are in terms 12-symbol blocks. This scheme requires small control overhead, however, allows only a limited set of legacy and 802.16(m) partitions and a limited set of TDD splits. In this section an alternative scheme is described which allows flexible allocation of legacy and 16m partition sizes as well as allows wider range of TDD splits enabling more flexibility in adapting to the DL/UL traffic ratios. In this scheme, there is a super-frame structure comprising one or more of: legacy 802.16(e) frame, 802.16(m) frame, and/or hybrid frame. In some embodiments, the length of the super-frame can be any multiple of 5 msec, thus a hybrid frame of 5ms is an included special case of the super-frame structure. In other embodiments, the super-frame length could be different from 5 ms. The 802.16(e) frames are same as the legacy frames. The 802.16(m) frames are not required to support 802.16(e) services and they need not have any legacy component. They can have either Full-frame structure or a Sub-frame 1:N structure consisting of N m sub-frames. The m sub-frame can be configured to have a possibly wide range of TDD split. In the hybrid frames that support both 802.16(e) and 802.16(m) terminals within the same 5 msec period, the 5msec interval is partitioned into 802.16(e) and 802.16(m) regions. Two different types of partitioning are described.

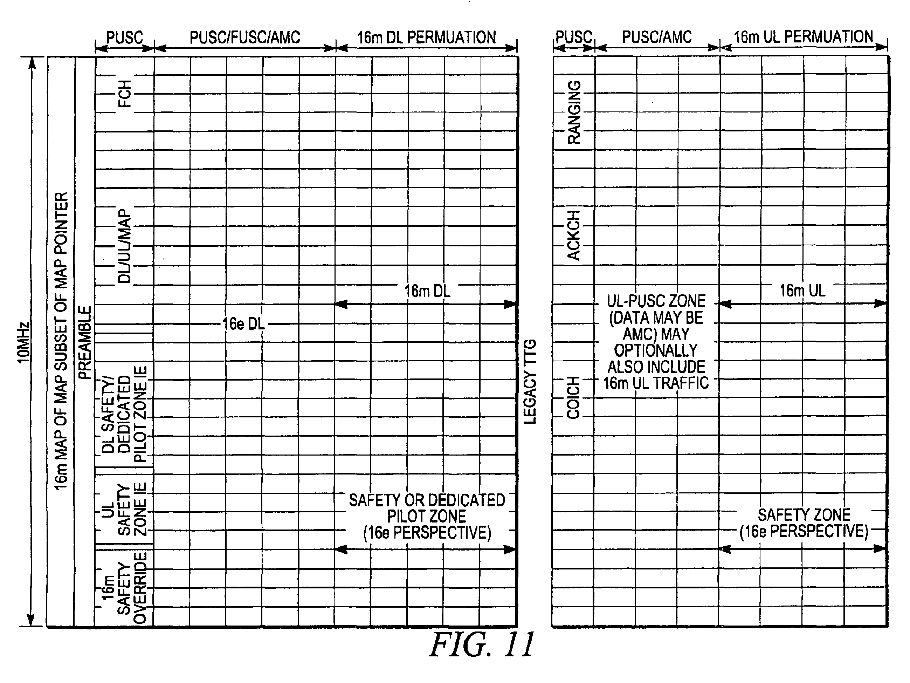

FIG. 11 illustrates a frame structure with flexibility in the sizes of resource region partitions, for example, 802.16(e) and 802.16(m) partitions, suitable for allocation radio resources to wireless communication terminals compliant with first and second protocols. A 5msec frame may have e-DL, e-UL, m-DL and m-UL regions. However, there is no constraint in the frame size (number of symbols) except that the sizes of the 802.16(e) regions are subject to the constraints imposed by the granularity of the sub-channel types used in those regions. The downlink radio frame generally comprises a first protocol resource region and a second protocol resource region. The radio frame also includes a first protocol allocation control message for allocating resources within the first protocol resource region, and a second protocol allocation control message for allocating resources within the second protocol resource region. In some embodiments, the first protocol allocation control message can allocate resources within the first protocol resource region to wireless terminal(s) compliant with the first protocol, and the second protocol allocation control message can allocate resources within the second protocol resource region to wireless terminal(s) compliant with the second protocol.

A wireless communication infrastructure entity, for example, an 802.16(m) base station generally transmits a sequence of radio frames, for example, for allocating radio resources to wireless terminals compliant with a first protocol and wireless terminals compliant with a second protocol. In one embodiment, at least fifty percent (50 %) of the radio frames in the sequence include a first protocol preamble, for example, an 802.16(e) preamble, in order to facilitate any 802.16(e) mobile units ability to maintain synchronization to the system. In this embodiment, a radio frame that includes a first protocol preamble may or may not also contain a first protocol allocation control message.

The second protocol, for example, 802.16(m), allocation control message may be located in a predetermined location within the radio frame. By locating the second protocol allocation message in a known or predetermined location, the complexity of an 802.16(m) mobile station can be reduced, since it may be able to avoid attempting to blindly detect the location of the message. Blind detection typically involves attempting to decode a message over multiple resource sets until a proper message cyclic redundancy check (CRC) is obtained. The first protocol resource region generally includes pilot sub-carriers. In one embodiment, the radio frame includes a message indicating that first protocol terminals should not use pilot sub-carriers in the second protocol resource region (e.g., by a messaging indicating a dedicated pilot zone with an absence of allocations to the first protocol terminals within the dedicated pilot zone, or by a message indicating a safety zone, or other means). Sub-carriers in second region may not exist or may be in a different location than pilots in the first region. In another embodiment, the message identifies a dedicated pilot interval that includes the second protocol resource region. The radio frame may also include a message identifying a boundary of the first protocol resource region (e.g., by a messaging indicating a dedicated pilot zone with an absence of allocations to the first protocol terminals within the dedicated pilot zone, or by a message indicating a safety zone, or other means).

In FIG. 11, the first symbol of the frame contains either a 802.16(m) MAP or a subset of a 802.16(m) MAP or an 802.16(m) MAP pointer that identifies the 802.16(m) region independently of the 802.16(e) MAP. This is followed by a one-symbol 802.16(e) preamble and the 802.16(e) MAP. The 802.16(e) MAP uses safety zones or dedicated pilot zones to indicate the 16m regions. It is possible to define a new pilot/subchannel/control structure in the 802.16(m) zones, which is more efficient than the 802.16(e) structures. In this example, the 802.16(e) DL and UL regions are shown to use PUSC zones. However, other 802.16(e) permutations can also be used alternatively. Also, in the 802.16(m) downlink and uplink zones (second protocol regions on downlink and uplink) the permutations, pilot patterns and pilot density, and other parameters such as subcarrier spacing or cyclic prefix length or symbol duration, may be the same as or different from those defined in 802.16(e). In other embodiments, the first symbol of the frame contains the 802.16(e) preamble and the 802.16(m) MAP or control channel/control signaling mentioned above is in a different position or positions in the frame. For example: within the portion of the frame labeled as 16m DL (e.g., dedicated pilot zone or safety/PAPR reduction zone from the 802.16(e) perspective). Generally, the 802.16(m) MAP does not need to be time multiplexed, but can be multiplexed using any of or any combination of time division multiplexing (TDM), frequency division multiplexing (FDM), or code division multiplexing (CDM). Also, the 802.16(m) MAP and its information can be either broadcast (e.g., intended to be decodable by nearly all of the 802.16(m) mobiles presently within the cell coverage area), dedicated (e.g., intended to be decodable only by a particular mobile or group of mobiles), or some combination of broadcast and dedicated (e.g., part of the control/signaling information is broadcast, and mobile-specific control/signaling is dedicated).

Also in FIG. 11 (among others), a 16m safety override indicator is shown within the 802.16(e) MAP/control channel structure. This is an optional aspect that can be included in order to allow an 802.16(m) mobile to identify that a particular 802.16(e) safety zone or dedicated pilot zone is being used as an 802.16(m) zone for 802.16(m) mobiles. This can be utilized in at least two aspects. First, if an 802.16(m) mobile can decode the 802.16(e) MAP/control channel structure, it will then know where the 802.16(m) zone(s) are located within the frame. Then, if the 802.16(m) MAP is in a known position within an 802.16(m) zone, the 802.16(m) mobile will know where the MAP is located to simplify the detection of the MAP. In other words, in this scenario, a pointer to the position of the 802.16(m) MAP is provided to the 802.16(m) mobile. Second, when the 802.16(m) mobile knows that a particular safety zone or dedicated pilot zone is to be used as an 802.16(m) zone, the 802.16(e) MAP can be used to allocate resources for an 802.16(m) mobile in the 802.16(m) zone. This use of the 802.16(e) MAP to allocate resources in an 802.16(m) zone can be done either alone (e.g., when no separate 802.16(m) MAP is present in the frame) or in addition to resource allocations that may be made by a separate 802.16(m) MAP. The 16m safety override indicator can be included in the 802.16(e) MAP in a way that is compatible with the 802.16(e) protocol. For example, a pre-determined available or reserved downlink interval usage code indicator (DIUC) or extended DIUC from the 802.16(e) protocol (e.g., that is not already assigned to a particular 802.16(e) function) can be used as or serve as the 16m safety override indicator. Such indicators can be used in the downlink MAP, or uplink MAP (in the uplink MAP, the equivalent of DIUC is uplink interval usage code or UIUC), or both (note that the terms DIUC/UIUC will be used generically in the description of the present invention, and these terms also may encompass extended DIUC /UIUC, extended-2 DIUC/UIUC, and extended DIUC/UIUC-dependent IEs). In the case of utilizing an available DIUC, the operation of 802.16(e) mobiles should not be impaired because an 802.16(e) mobile generally knows to ignore any DIUCs or UIUCs that it is not capable of interpreting. Other 802.16(e) compatible methods are also possible, such as utilizing other reserved codes or fields in other information elements or IEs) but care must be taken to ensure that the operation of 802.16(e) mobiles is not impaired. Generally, the safety zone/dedicated pilot override depicted in the legacy (802.16(e)) MAP region may be specified either implicitly or explicitly. An example of implicit is to define a new 16m-only MAP IE (e.g., based on a reserved DIUC/UIUC) that provides a pointer to the 16m region(s) of the frame, and the pointer would be set to coincide with e.g., the beginning of the 802.16(e) safety zone or dedicated pilot zone. Another example is that an IE could assign a 16m mobile to a resource within the safety/ dedicated pilot zone (either using existing 16e MAP IE or a newly defined 16m MAP IE). An example of an explicit override is a new IE (e.g., based on a reserved DIUC/UIUC) that instructs 16m mobiles to ignore the safety/ dedicated pilot zone IE. Also note that in some embodiments the safety zone/dedicated pilot override depicted in the legacy MAP region may instead be indicated in higher-layer signaling, such as a downlink channel descriptor (DCD) that is transmitted occasionally rather than every frame, rather than in the MAP. This will reduce MAP overhead, especially if the size/ placement of the 16 m zones is changed only slowly.

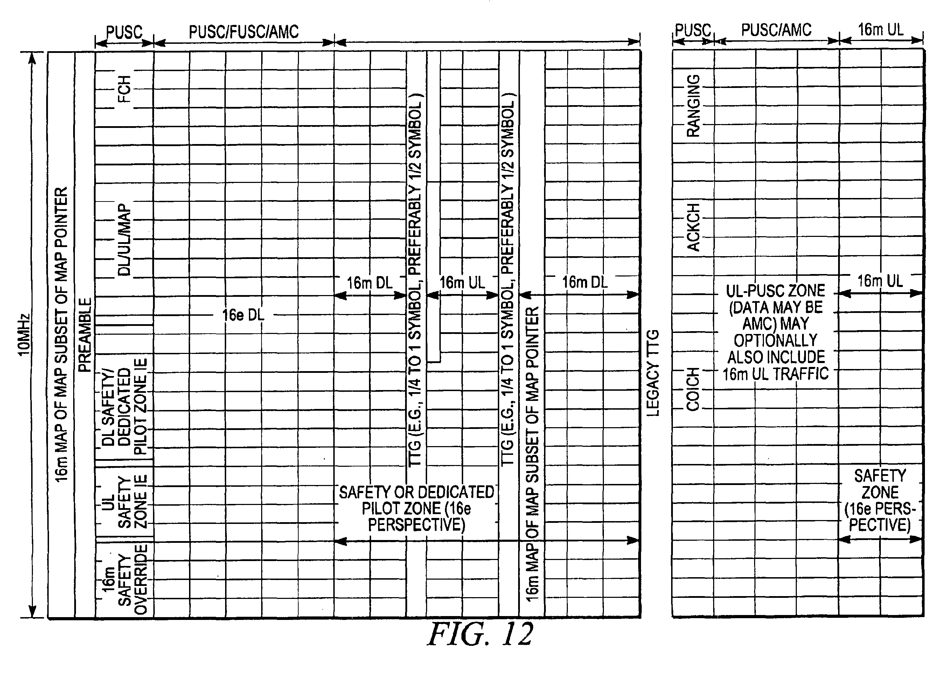

In FIG. 12, a first 802.16(m) sub-frame (also referred to as a region or resource region or zone is completely contained in the 802.16(m) region created by the safety zone or dedicated pilot zone before the legacy TDD boundary. The DL and UL intervals are adjacent. The DL interval of the second m sub-frame is also located before the legacy TDD boundary. However, its UL interval is separated from it by 802.16(e) UL regions. The adjacency of the UL interval of the first m sub-frame to the DL interval of the second m sub-frame will benefit the link adaptation performance such as in AMC and MIMO beam-forming. However, this adjacency may be detrimental to fast retransmissions due to a lack of sufficient processing time, which may have to wait until the DL interval in the next frame.

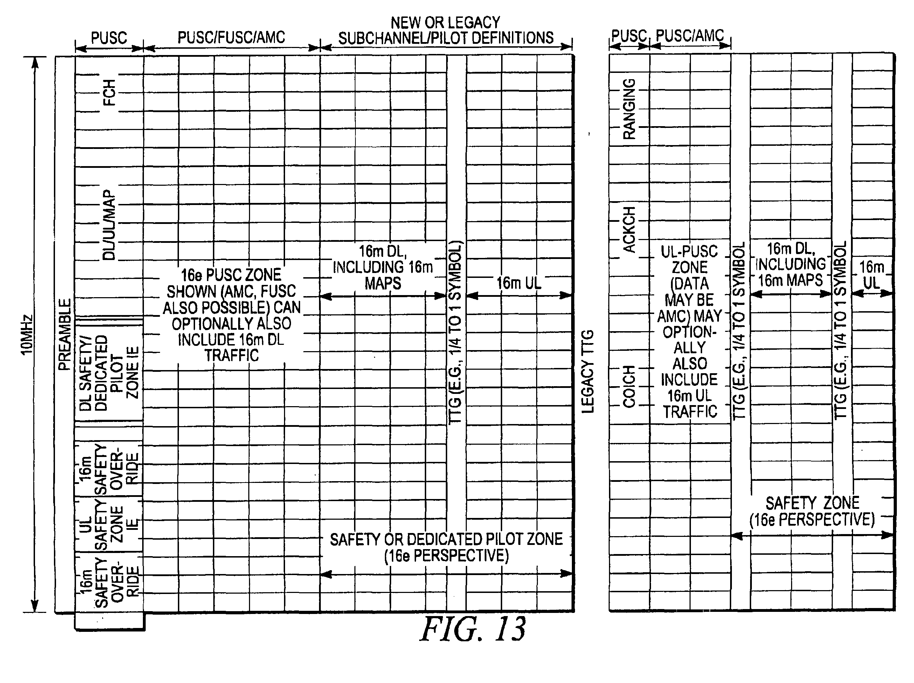

In FIG. 13, two 802.16(m) sub-frames are located in the two 802.16(m) regions created by two safety zones or dedicated pilot zones. For both sub-frames, the UL interval is adjacent to the DL interval. A drawback of this scheme is the unused resources in the legacy TTG, which is not required for the 802.16(m) frame structure or for the 802.16(e) legacy virtual frame.

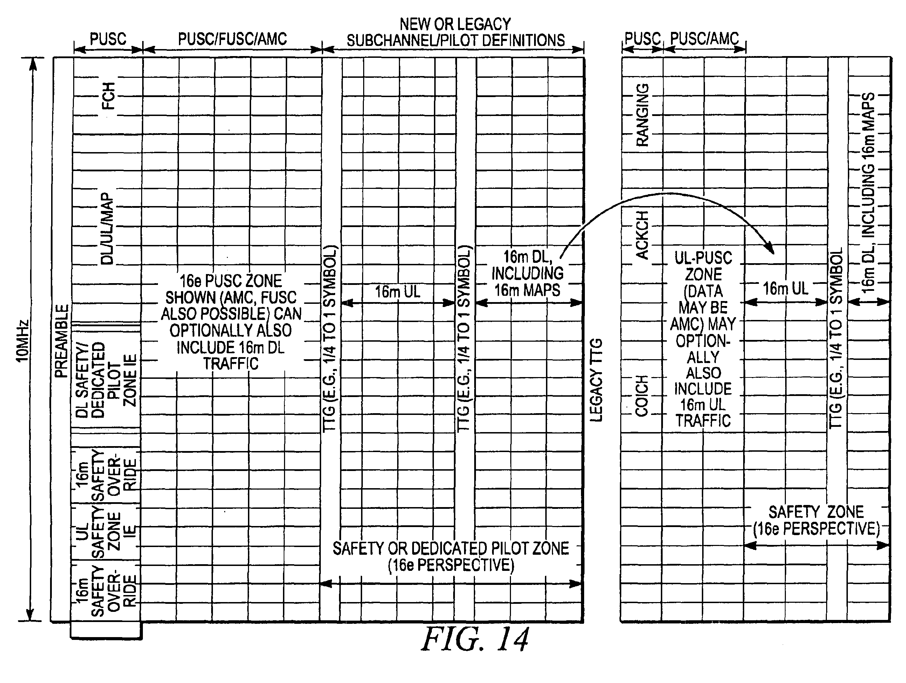

In FIG. 14, a sub-frame structure is shown in which the 802.16(m) regions begin at known locations. Thus the 802.16(m) MAP pointer/MAP subset/MAP in the first symbol (or alternatively embedded or included in the 802.16(e) MAP in an 802.16(e) compatible manner, such as based on utilizing a reserved DIUC) is not required as in other embodiments, for example, the structure of FIG. 10. In FIG. 14, the 802.16(m) UL region appears before the 802.16(m) DL region for both 802.16(m) sub-frames. Thus the UL MAP relevance is preferably for the next 802.16(m) sub-frame. For the first 802.16(m) sub-frame, the UL region is located after the e-DL region, separated by the TTG interval. Thus the starting location of the 802.16(m) region can be blindly detected based on the known TTG interval location. The starting location of the second m sub-frame can be described in the first m sub-frame. The wide separation of the m-UL interval from the m-DL interval of the previous m sub-frame may allow faster HARQ feedback resulting in faster retransmissions and lower packet latency.

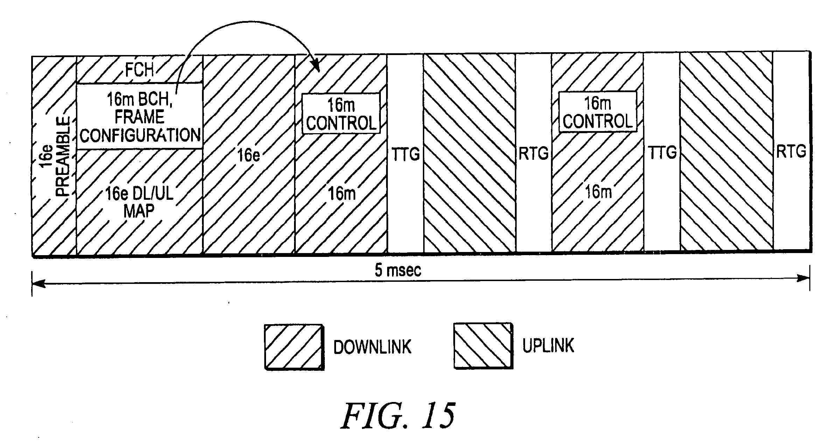

FIG. 15 is an alternative 802.16(m) frame structure wherein the structure of the 5 msec hybrid frame is broadcasted using the first DL-MAP-IE() of the 802.16(e) DL-MAP after the FCH, i.e., 4 slots. These IE()s are discarded by 802.16(e) terminals. Multiple such IE()s can be used to achieve higher repetition factors and thereby achieve high reliability/coverage. With this structure, efficient detection of 802.16(m) control can be possible independent of the 802.16(e) MAP and efficient micro-sleep can be implemented in 802.16(m) terminals. The main advantage of this structure is that an entire symbol need not be allocated for the 802.16(m) MAP pointer/MAP subset/MAP. The usual DL/UL order in the m sub-frame can be maintained. In the above frame structures, either of the 802.16(e) DL and UL regions can be reduced to zero, thereby allocating the entire frame for 802.16(m) traffic. An 802.16(m) frame, which is not backward-compatible, can also be constructed by eliminating the 802.16(e) DL and UL regions as well as the 802.16(e) MAPs. Another method for including the 802.16(m) frame structure information in the 802.16(e) MAP is to utilize a predetermined one of the reserved DIUC/UIUC of 802.16(e) to indicate that the information in a particular IE is frame descriptive information. As an example, in the DL-MAP-IE() structure, the Extented-2 DIUC dependent IE() (which corresponds to the DIUC value 14) can be used; in this Extended-2 DIUC dependent IE() structure a reserved value of Extended-2 DIUC in the range 0x0B-0x0D or 0x0F can be used to describe the 802.16m frame structure; the length parameter in this IE will be set to the size of the frame structure in bytes. Alternatively, the HARQ-DL-MAP-IE() can be used (using the Extended-2 DIUC dependent IE() with Extended-2 DIUC value 0x07); this HARQ-DL-MAP-IE() structure with "Mode" parameter set to a value in the range 0b0111-0b1111 (which are reserved and not used for 802.16(e) structures). Another structure that can also be used is the DL-MAP-IE() with DIUC=15 which identifies an Extended DIUC dependent IE() structure; using a reserved value for the Extended DIUC parameter in the range 0x09-0x0A or 0x0C-0x0E an 802.16(m) frame structure description can be constructed.

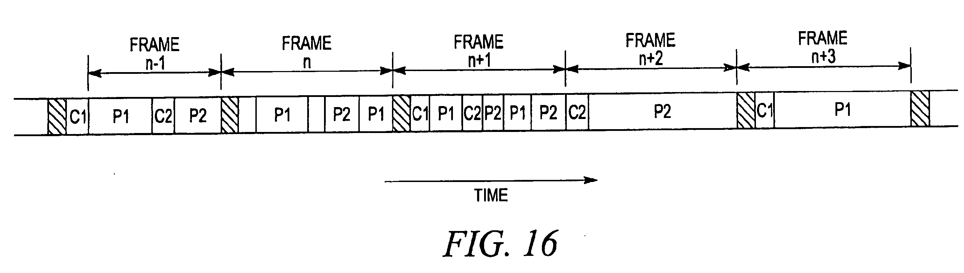

FIG. 16 illustrates a frame structure with flexibility in the sizes of the resource region partitions, for example, 802.16(e) and 802.16(m) partitions, suitable for allocation radio resources to wireless communication terminals compliant with first and second protocols (e.g., 802.16(e) and 802.16(m)). In one embodiment, at least fifty percent (50 %) of the radio frames in the sequence include a first protocol, for example, an 802.16(e) protocol, preamble. The sequence includes a first protocol resource region and a second protocol resource region, wherein a first protocol allocation control message allocates resources within the first protocol resource region and a second protocol allocation control message allocates resources within the second protocol resource region.

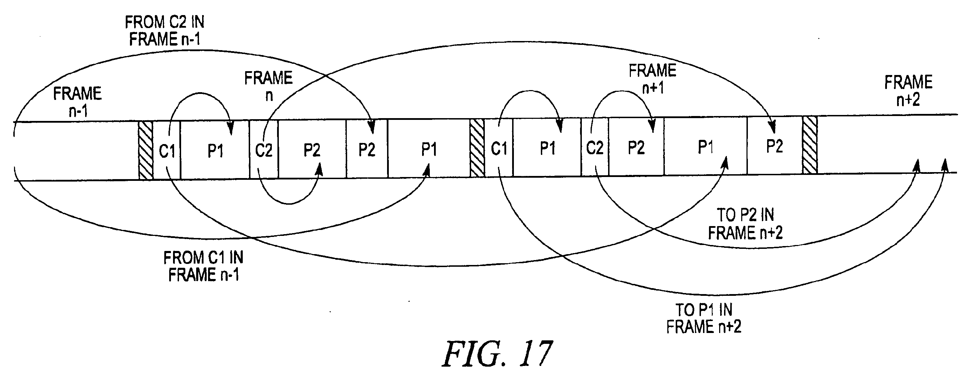

In FIG. 17, the control messages in common frame *n* describe the allocation in frame *n*+*1* for both the first and second protocols, for example, 802.16(e) and 802.16(m) protocols. FIG. 17 also illustrates the first and second resource regions in the common frame *n*+*1* being described by control messages in a preceding frame *n*. In one implementation, the first and second protocol allocation control messages occur in a common frame, wherein the first protocol allocation control message allocates resources within a first protocol resource region in a frame subsequent to the common frame and the second protocol allocation control message allocates resources within a second protocol resource region in a frame subsequent to the common frame. In another embodiment, the first and second protocol resource regions occur in a common frame, wherein the first protocol allocation control message occurs in a frame preceding the common frame, and the second protocol allocation control message occurs in a frame preceding the common frame.

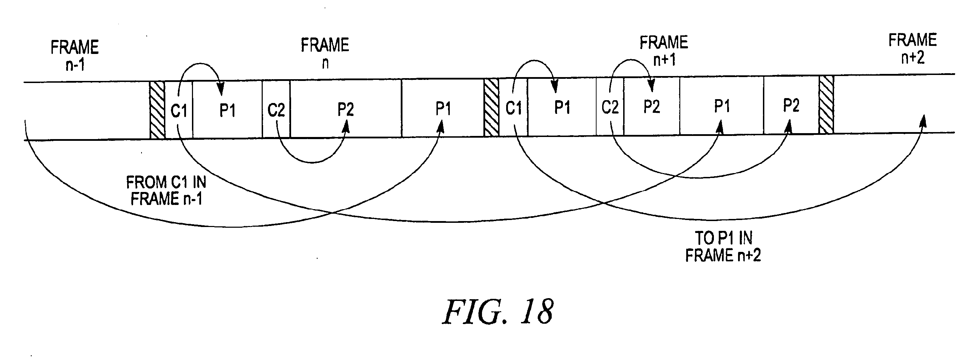

FIG. 18 illustrates control messages for the first and second protocols in common frame *n*. Part of the first protocol control message allocates resources in the first protocol region of frame *n*+*1* and the second protocol control message allocates resources in the second protocol region of the same frame *n*.

In some embodiments of the invention, the first protocol allocation control message (e.g., 802.16(e) MAP) can allocate resources within the first protocol resource region (e.g., 802.16(e) region or zone) to a wireless terminal compliant with both the first protocol and the second protocol (e.g., an 802.16(m) terminal). In this case, the 802.16(m) terminal assigned/allocated resources within the 802.16(e) region may be required to receive and/or transmit using the 802.16(e) protocol. Assigning/allocating resources to an 802.16(m) mobile within an 802.16(e) region in this manner can be advantageous for load balancing purposes - for example, there may be times when the 802.16(m) region may become fully allocated/utilized while the 802.16(e) region is not fully utilized. This can occur dynamically based on traffic patterns and scheduling policies. In such a case, some of the 802.16(m) terminals can be assigned resources in the 802.16(e) region in order to accommodate a higher total amount of traffic for 802.16(m) terminals.

While the present disclosure and the best modes thereof have been described in a manner establishing possession and enabling those of ordinary skill to make and use the same, it will be understood and appreciated that there are equivalents to the exemplary embodiments disclosed herein and that modifications and variations may be made thereto without departing from the scope of the inventions, which are to be limited not by the exemplary embodiments but by the appended claims.

## Claims

1. A method performed by a wireless communication infrastructure entity (101, 102), the method comprising:
allocating radio resources, in a sequence of radio frames, to a wireless terminal (103, 110) compliant with a first protocol and to a wireless terminal (103, 110) compliant with a second protocol the first protocol being different from the second protocol the method being **characterized in that**:
the sequence of radio frames includes a first protocol resource region and a second protocol resource region,
the sequence of radio frames includes a first protocol allocation control message and a second protocol allocation control message,
the first protocol allocation control message allocating resources within the first protocol resource region, the second protocol allocation control message allocating resources within the second protocol resource region.

2. The method Claim 1,
the first protocol allocation control message and the second protocol allocation control message occur in a common frame,
the first protocol allocation control message allocating resources within a first protocol resource region in a frame subsequent to the common frame, the second protocol allocation control message allocating resources within a second protocol resource region in a frame subsequent to the common frame.

3. The method Claim 1,
the first protocol resource region and the second protocol resource region occur in a common frame,
the first protocol allocation control message occurs in a frame preceding the common frame, and the second protocol allocation control message occurs in a frame preceding the common frame.

4. The method of Claim 1, at least fifty percent of the radio frames in the sequence include a first protocol preamble.

5. The method of Claim 1, the second protocol allocation control message is located in a predetermined location within at least some of the frames in the sequence of radio frames.

6. The method of Claim 1, at least the first protocol resource region including pilot sub-carriers, the radio frame including a message indicating that wireless terminals (103, 110) compliant with the first protocol should not use pilot sub-carriers in the second protocol resource region.

7. The method of Claim 6, the message identifying a dedicated pilot interval, the dedicated pilot interval including the second protocol resource region.

8. The method of Claim 6, the radio frame including a message identifying a boundary of the first protocol resource region.

9. The method of Claim 8, the radio frame including a pointer pointing to a location of the second allocation control message in the radio frame.

10. The method of Claim 1, the first protocol is IEEE 802.16(e) and the second protocol is IEEE 802.16(m).

11. The method of any preceding Claim, transmitting the radio frame to the wireless terminal (103, 110) compliant with the first protocol and to the wireless terminal (103, 110) compliant with the second protocol.

## Patentansprüche

1. Verfahren, ausgeführt von einer drahtlosen Kommunikations-Infrastruktur-Entität (101, 102), das folgendes aufweist:
Zuweisung von Funkressourcen, in einer Abfolge von Funkrahmen, an ein drahtloses Terminal (103, 110) entsprechend einem ersten Protokoll und an ein drahtloses Terminal (103, 110) entsprechend einem zweiten Protokoll, wobei sich das erste Protokoll von dem zweiten Protokoll unterscheidet, wobei das Verfahren **dadurch gekennzeichnet ist, dass**:
die Abfolge von Funkrahmen einen ersten Protokollressourcenbereich und einen zweiten Protokollressourcenbereich aufweist,
die Abfolge von Funkrahmen eine erste Protokollzuweisungssteuernachricht und eine zweite Protokollzuweisungssteuernachricht aufweist,
die erste Protokollzuweisungssteuernachricht Ressourcen innerhalb des ersten Protokollressourcenbereichs zuweist, die zweite Protokollzuweisungssteuernachricht Ressourcen innerhalb des zweiten Protokollressourcenbereichs zuweist.

2. Verfahren nach Anspruch 1,
wobei die erste Protokollzuweisungssteuernachricht und die zweite Protokollzuweisungssteuernachricht in einem gemeinsamen Rahmen auftreten,
wobei die erste Protokollzuweisungssteuernachricht Ressourcen innerhalb eines ersten Protokollressourcenbereichs in einem Rahmen anschließend an den gemeinsamen Rahmen zuweist, wobei die zweite Protokollzuweisungssteuernachricht Ressourcen innerhalb eines zweiten Protokollressourcenbereichs in einem Rahmen anschließend an den gemeinsamen Rahmen zuweist.

3. Verfahren nach Anspruch 1,
wobei der erste Protokollressourcenbereich und der zweite Protokollressourcenbereich in einem gemeinsamen Rahmen auftreten,
wobei die erste Protokollzuweisungssteuernachricht in einem Rahmen auftritt, der dem gemeinsamen Rahmen vorausgeht, und die zweite Protokollzuweisungssteuernachricht in einem Rahmen auftritt, der dem gemeinsamen Rahmen vorausgeht.

4. Verfahren nach Anspruch 1, wobei mindestens fünfzig Prozent der Funkrahmen in der Abfolge eine erste Protokollpräambel aufweisen.

5. Verfahren nach Anspruch 1, wobei sich die zweite Protokollzuweisungssteuernachricht an einer vorbestimmten Position innerhalb mindestens einiger der Rahmen in der Abfolge von Funkrahmen befindet.

6. Verfahren nach Anspruch 1, wobei mindestens der erste Protokollressourcenbereich Pilot-Unterträger aufweist, wobei der Funkrahmen eine Nachricht aufweist, die angibt, dass drahtlose Terminals (103, 110) entsprechend dem ersten Protokoll keine Pilot-Unterträger in dem zweiten Protokollressourcenbereich verwenden sollten.

7. Verfahren nach Anspruch 6, wobei die Nachricht ein zugehöriges Pilot-Intervall identifiziert, wobei das zugehörige Pilot-Intervall den zweiten Protokollressourcenbereich aufweist.

8. Verfahren nach Anspruch 6, wobei der Funkrahmen eine Nachricht aufweist, die eine Begrenzung des ersten Protokollressourcenbereichs identifiziert.

9. Verfahren nach Anspruch 8, wobei der Funkrahmen einen Anzeiger aufweist, der auf eine Position der zweiten Zuweisungssteuernachricht in dem Funkrahmen hinweist.

10. Verfahren nach Anspruch 1, wobei das erste Protokoll IEEE 802.16(e) und das zweite Protokoll IEEE 802.16(m) ist.

11. Verfahren nach einem der vorhergehenden Ansprüche, wobei der Funkrahmen an das drahtlose Terminal (103, 110) entsprechend dem ersten Protokoll und an das drahtlose Terminal (103, 110) entsprechend dem zweiten Protokoll übertragen wird.

## Revendications

1. Procédé exécuté par une quantité d'infrastructures de communication sans fil (101, 102), le procédé comprenant:
attribuer des ressources radio, dans une séquence de trames radio, à un terminal sans fil (103, 110) correspondant à un premier protocole et à un terminal sans fil (103, 110) correspondant à un deuxième protocole, le premier protocole étant différent du deuxième protocole, le procédé étant **caractérisé en ce que**:
la séquence de trames radio comprend une région de ressources de premier protocole et une région de ressources de deuxième protocole,
la séquence de trames radio comprend un message de contrôle d'attribution de premier protocole et un message de contrôle d'attribution de deuxième protocole,
le message de contrôle d'attribution de premier protocole attribuant des ressources dans la région de ressources de premier protocole, le message de contrôle d'attribution de deuxième protocole attribuant des ressources dans la région de ressources du deuxième protocole.

2. Procédé selon la revendication 1,
le message de contrôle d'attribution du premier protocole et le message de contrôle d'attribution du deuxième protocole se produisent dans une trame commune,
le message de contrôle d'attribution du premier protocole attribuant des ressources dans une région de ressources de premier protocole dans une trame faisant suite à la trame commune, le message de contrôle d'attribution de deuxième protocole attribuant des ressources dans une région de ressources de deuxième protocole dans une trame faisant suite à la trame commune.

3. Procédé selon la revendication 1,
la région de ressources de premier protocole et la région de ressources de deuxième protocole se situent dans une trame commune,
le message de contrôle d'attribution de premier protocole a lieu dans une trame précédent la trame commune, et le message de contrôle d'attribution de deuxième protocole a lieu dans une trame précédent la trame commune.

4. Procédé selon la revendication 1, au moins cinquante pour cent des trames radio dans la séquence comprennent un préambule de premier protocole.

5. Procédé selon la revendication 1, le message de contrôle d'attribution de deuxième protocole est situé à un emplacement prédéterminé dans au moins quelques-unes des trames dans la séquence des trames radio.

6. Procédé selon la revendication 1, au moins la région de ressources de premier protocole incluant des sous-porteuses pilotes, la trame radio incluant un message indiquant que des terminaux sans fil (103, 110) correspondant au premier protocole ne devrait pas utiliser les sous-porteuses pilote dans la région de ressources de deuxième protocole.

7. Procédé selon la revendication 6, le message identifiant un intervalle pilote dédié, l'intervalle pilote dédié incluant la région de ressources de deuxième protocole.

8. Procédé selon la revendication 6, la trame radio incluant un message identifiant une limite de la région de ressources de premier protocole.

9. Procédé selon la revendication 8, la trame radio incluant un pointeur pointant vers un emplacement du deuxième message de contrôle d'attribution dans la trame radio.

10. Procédé selon la revendication 1, le premier protocole est IEEE 902,16(e) et le deuxième protocole est IEEE 802, 16 (m).

11. Procédé selon l'une quelconque des revendications précédentes, transmettant la trame radio au terminal sans fil (103, 110) correspondant au premier protocole et au terminal sans fil (103, 110) correspondant au deuxième protocole.
